# EUROPEAN PATENT APPLICATION

(11) **EP 4 480 809 A1**
(43) Date of publication of application: **25.12.2024**
(21) Application number: 22926032.8
(22) Date of filing: 04.10.2022
(51) Int. Cl.: B63H 25/38, B63B 49/00, B63B 79/10, B63B 79/20, B63H 25/42

(54) **UNIAXIAL TWIN-RUDDER SHIP HAVING AUTOMATIC DOCKING FUNCTION**

(30) Priority: 14.02.2022 JP 2022020087
(71) Applicant: Japan Hamworthy & Co., Ltd., Osaka-shi, Osaka 536-0014 (JP)
(72) Inventor: TOMITA, Kazushi, Osaka-shi, Osaka 536-0014 (JP); YAMAMOTO, Hirotaka, Osaka-shi, Osaka 536-0014 (JP)
(74) Representative: Grünecker Patent- und Rechtsanwälte PartG mbB
(86) International application number: PCT/JP2022/037091
(87) International publication number: WO 2023/153015

(57) **Abstract**

A hull motion control unit 620 performs steering for a pinwheeling swing such that a bow distance and a stern distance that are measured by a quay separation distance measuring device are made equal to each other and the fore-and-aft direction of a ship 501 is parallel to a target quay 700, and then the ship 501 is caused to laterally approach and dock in the target quay 700 while keeping the parallel state.

## Description

### Technical Field

The present invention relates to a uniaxial twin-rudder ship having an automatic docking function and a technique for maneuvering with high accuracy in automatic maneuvering.

### Background Art

As a conventional technique for automatically maneuvering ships, for example, an automatic collision-prevention support device is described in a Japanese patent publication, Japanese Patent No. 4055915.

The device is installed with a radar in a ship and includes an other ship detector that detects, from video information acquired by the radar, the length, course, and speed of another ship around the own ship, a stopping performance calculator that calculates stopping performance based on the speed of the other ship relative to the own ship and the detected length of the other ship, the speed being detected by the other ship detector, a dangerous area calculator that determines, based on the calculated stopping performance and the characteristics of the navigation sea area of the own ship, a dangerous area where the own ship may collide with the other ship when the own ship enters the area, and a display that displays the determined dangerous area.

Moreover, as a technique for applying a braking force to a ship, an emergency maneuvering method for a ship is described in a Japanese patent publication, Japanese Patent Laid-Open No. 7-52887. In this method, an emergency steering device is started in emergency so as to control a rudder controller placed on a higher priority than any normal steering mode, forming a rudder angle for providing two high-lift rudders with a maximum propeller slipstream as astern power. The astern power leads to astern power to the ship against an inertial force applied in the forward direction of the ship, thereby urgently stopping the ship or urgently moving the ship astern. In a state where a thruster propeller is operated forward in a single direction, astern power can be immediately obtained, thereby stopping or moving the ship astern with little trouble at a short distance in a short time.

Moreover, in Japanese patent publication, Japanese Patent Laid-Open No. 2017-052297, a ship maneuvering device is proposed on the assumption that special motions such as lateral motions, diagonal fore-and-aft motions, and pinwheeling or the like are obtained and high maneuvering accuracy is requested in terms of a position and a speed or the like in a ship position/fore-and-aft azimuth keeping steering. In the ship maneuvering device, a command unit provides a ship motion control unit with instructions about a command motion direction, a command turning angular speed, a fore-and-aft direction command speed, and a hull lateral command speed to maneuver a ship in a maneuvering support mode. A thrust distributing unit distributes a hull control force and a hull turning control force to a target propulsion-unit thrust, which is generated by a combination of the thrust of a propeller propulsion unit making a forward constant rotation and the steering angle of two high-lift rudders, and a target thruster propulsion generated by a bow thruster.

### Disclosure of the Invention

### Technical Problem

For large ships, an autopilot for tracking an input course (automatic steering device) has been widely used. Autopilot is an autonavigator using a compass. Steering is performed for navigation to a preset course in a certain direction. If heading deviates from the set course due to wind or waves or the like, steering is automatically performed to change the heading of the ship to a set azimuth to keep the set course.

Since the probability of collision with an obstacle decreases in the ocean, automatic steering on autopilot is conducted with relative ease. An autopilot is set to steer a ship with a small rudder angle while avoiding rapid steering with a large rudder angle, which is suitable for navigation in the ocean with a sufficient time and distance.

Furthermore, an autopilot keeps "course" indicated by a compass and does not keep a course line. Thus, a typical autopilot does not have the function of correcting a position if a ship deviates from a course line due to a wind pressure or a tidal current or the like. Hence, it is necessary to confirm, in particular, lateral winds or waves and a deviation from a course line and a ship position in the case of lateral winds, waves, and a strong tidal current.

In addition, in a congested sea area or a sea area having an obstacle, an accurate course change in a short time and a short distance is necessary or a course needs to be kept with high accuracy, so that manual steering is needed.

Upon landing, a ship is turned from landing navigation to a landing course to move in a bow direction with the fore-and-aft direction parallel to a quay and approaches the quay in view of external forces such as tidal power of an offshore current or an onshore current, a tide, and wind power that affect the hull. Thus, a wide water and a long course line are necessary.

The present invention has been devised to solve the problem. An object of the present invention is to provide a uniaxial twin-rudder ship having an automatic docking function, by which steering is performed with a bow thruster such that the fore-and-aft direction of the ship is located in parallel with the target quay at a position near the target quay and the ship is allowed to laterally approach and dock in the target quay while keeping the parallel state, and the steering angle is corrected in view of external forces such as wind, waves, and tidal currents that may affect the hull of the ship.

### Solution to Problem

In order to solve the problem, a uniaxial twin-rudder ship having an automatic docking function according to the present invention, the ship including a propulsion system, a maneuvering system that controls the propulsion system, and an observation system that observes a hull motion state of a ship, wherein the propulsion system includes a propulsion propeller disposed at the stern of the ship, a pair of right and left high-lift rudders disposed behind the propulsion propeller, a pair of steering engines that drive the respective high-lift rudders, a bow thruster, and a thruster controller that controls the bow thruster, the observation system includes a ship speed measuring device that measures a speed of the ship in the fore-and-aft direction and a speed of the ship in the hull lateral direction, a position measuring device that measures a position of the ship, a direction finding device that measures a heading of the ship, and a quay separation distance measuring device that measures a bow distance between the bow of the ship and a target quay and a stern distance between the stern of the ship and the target quay, the maneuvering system includes: an automatic docking maneuvering unit including an automatic docking command unit, a hull motion control unit, and a sensor unit, and a maneuvering support unit, the sensor unit inputs the outputs of the measuring devices of the observation system to the hull motion control unit and the maneuvering support unit, the automatic docking command unit includes: a quay approach steering unit in charge of landing navigation to the target quay, and a quay docking steering unit that causes the ship to approach the target quay from a position near the target quay, the quay proximity steering unit instructs the hull motion control unit on a motion command direction of a hull motion that directs the ship to a landing course reaching the target quay selected and set on an electronic marine chart for sailing and a fore-and-aft direction command speed and a hull-lateral-direction command speed that are necessary for the hull motion, the quay docking steering unit instructs the hull motion control unit on steering in which the ship is caused to approach and dock in the target quay such that the fore-and-aft direction of the ship is located in parallel with the target quay at a position near the target quay and the ship is caused to approach and dock in the target quay while keeping the parallel state, the hull motion control unit includes a steering control unit that controls the steering engines and controls the direction of a hull motion with a combination of rudder angles of the two high-lift rudders, and a thruster control unit that controls a bow direction by adjusting thruster propulsion of the bow thruster by means of the thruster controller; under the instructions of the quay proximity steering unit, a motion command direction, a fore-and-aft direction command speed, and a hull-lateral-direction command speed are obtained by the steering control unit and the thruster control unit and navigation is allowed to a position at a set distance from the target quay, and under the instructions of the quay docking steering unit, steering for a pinwheeling swing is performed by the steering control unit and the thruster control unit such that a bow distance between the bow and the quay and a stern distance between the stern and the quay that are measured by the quay separation distance measuring device are made equal to each other and the fore-and-aft direction of the ship is parallel to the target quay, and then steering for a lateral movement is performed to cause the ship to laterally approach and dock in the target quay while keeping the parallel state; the maneuvering support unit includes a digital twin calculating unit, a simulation calculating unit, a resultant calculating unit for external forces, and an indicated rudder-angle calculating unit; the digital twin calculating unit makes a real-time collection of a ship speed measured by the ship speed measuring device, a ship position measured by the position measuring device, ship heading measured by the direction finding device, and a bow distance and a stern distance that are measured by the quay separation distance measuring device and reproduces a real hull motion of the ship obtained with a current steering angle and a current thruster propulsion on an electronic marine chart for sailing; the simulation calculating unit displays an assumed hull motion of the ship determined by calculation on the electronic marine chart for sailing on the assumption that a force applied to a hull is a driving force of a hull motion with the current steering angle and the current thruster propulsion; the resultant calculating unit for external forces calculates the direction of application and magnitude of a resultant of external forces applied to the hull based on a ship speed difference, a ship position difference, and a heading difference in the real hull motion and the assumed hull motion, and the indicated rudder-angle calculating unit calculates a corrected rudder angle and a corrected thruster propulsion against a resultant external force, calculates a proper steering angle, which is necessary for landing navigation against an external force, by correcting a current steering angle by the corrected rudder angle, calculates a proper thruster propulsion, which is necessary for landing navigation against an external force, by correcting a current thruster propulsion by the corrected thruster propulsion, and provides the calculated proper steering angle as an indicated rudder angle to the hull motion control unit and the proper thruster propulsion as an indicated output to the hull motion control unit.

### Advantageous Effects of Invention

With this configuration of the present invention, under the instructions of the quay docking steering unit, steering for a pinwheeling swing is performed such that the fore-and-aft direction of the ship is parallel to the target quay at a position close to the target quay, and then steering for a lateral movement is performed to cause the ship to laterally approach and dock in the target quay while keeping the parallel state.

Thus, under the instructions of the quay approach steering unit, navigation to a position close to the target quay is allowed in landing navigation with the fore-and-aft direction directed to the target quay, approach can be made to the target quay along a short course line in a small water in a short time, thereby relaxing the states of external forces that affect the hull, the external forces including tidal power of an offshore current or an onshore current upon landing, a tide, and wind power.

Moreover, a steering angle can be corrected upon landing in consideration of external forces such as wind, waves, and a tidal current that are applied to the hull, achieving efficient landing maneuvering with high accuracy.

In other words, a comparison is made between a reproduced real hull motion of the ship on an electronic marine chart for sailing by the digital twin calculating unit and an assumed hull motion of the ship on the electronic marine chart for sailing by the simulation calculating unit, so that the direction of application and magnitude of the resultant of all external forces applied to the hull can be obtained without determining individual external forces such as wind, waves, and tidal currents that are applied to the hull.

Hence, a proper steering angle necessary for landing navigation can be calculated by correcting a current steering angle by the corrected rudder angle against the resultant external force.

### Brief Description of the Drawings

[FIG. 1] FIG. 1 is a schematic diagram illustrating a propulsion system for a uniaxial twin-rudder ship having an automatic docking function, a maneuvering system, and an observation system according to an embodiment of the present invention.
[FIG. 2] FIG. 2 is a schematic diagram illustrating a propulsion unit, high-lift rudders, and a bow thruster according to the embodiment.
[FIG. 3] FIG. 3 is a perspective view illustrating the configuration of a stern according to the embodiment.
[FIG. 4] FIG. 4 is a schematic diagram illustrating a maneuvering stand for the steering controller of the uniaxial twin-rudder ship according to the embodiment.
[FIG. 5] FIG. 5 is a block diagram illustrating the configuration of the maneuvering stand according to the embodiment.

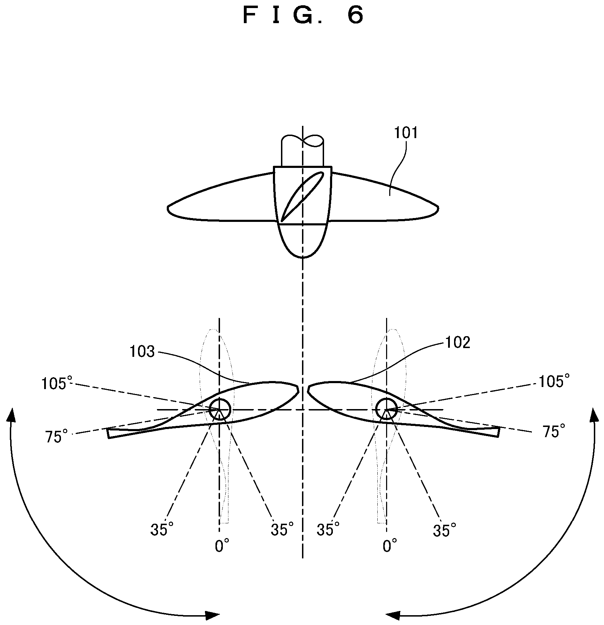

[FIG. 6] FIG. 6 is a plan view illustrating the motion ranges of the high-lift rudders according to the embodiment.
[FIG. 7] FIG. 7 is a schematic diagram illustrating the combined rudder angles and turning directions of the rudders.
[FIG. 8] FIG. 8 is a schematic diagram illustrating collision-avoidance maneuvering and a state of docking according to the embodiment.

### Best Mode for Carrying Out the Invention

An embodiment of a steering system according to the present invention will be described below in accordance with the accompanying drawings.

### (Configuration of Example)

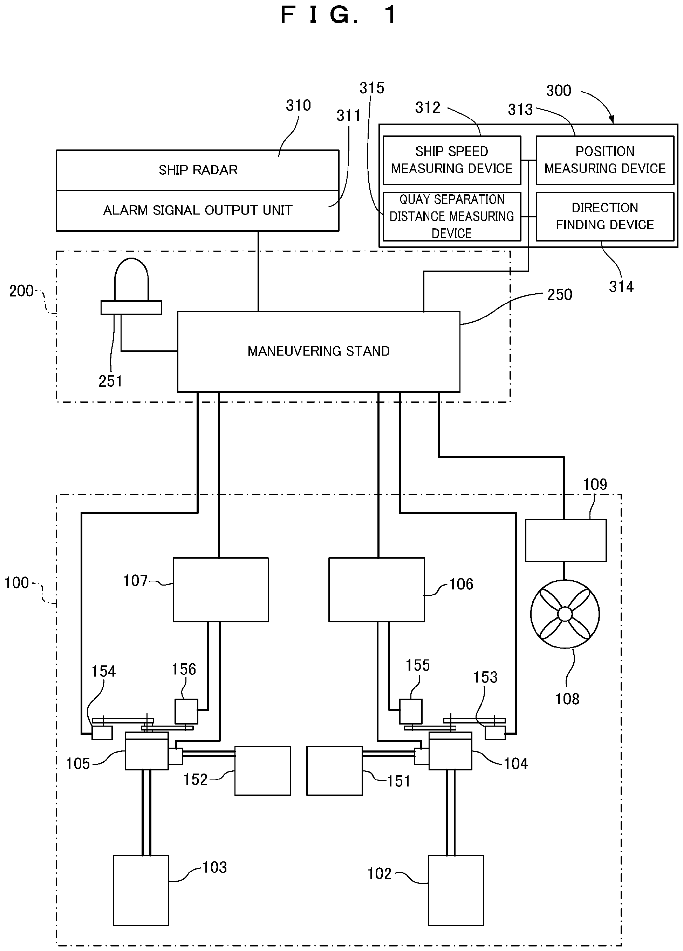

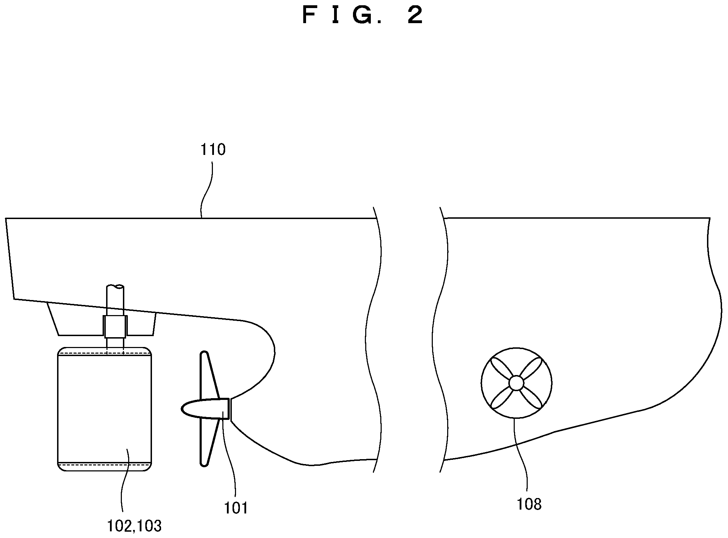

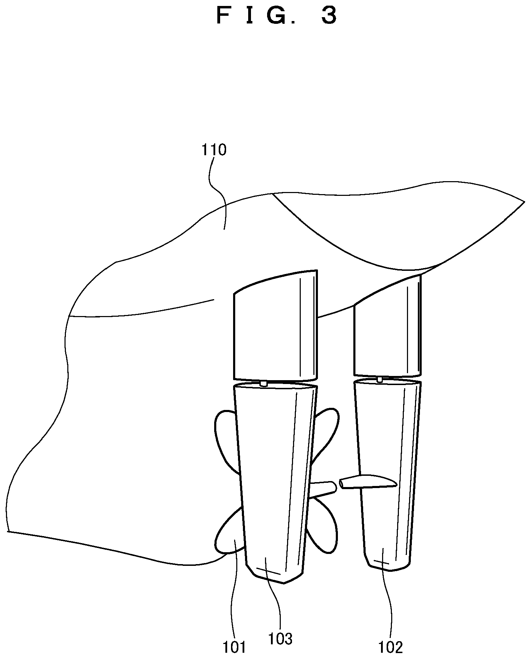

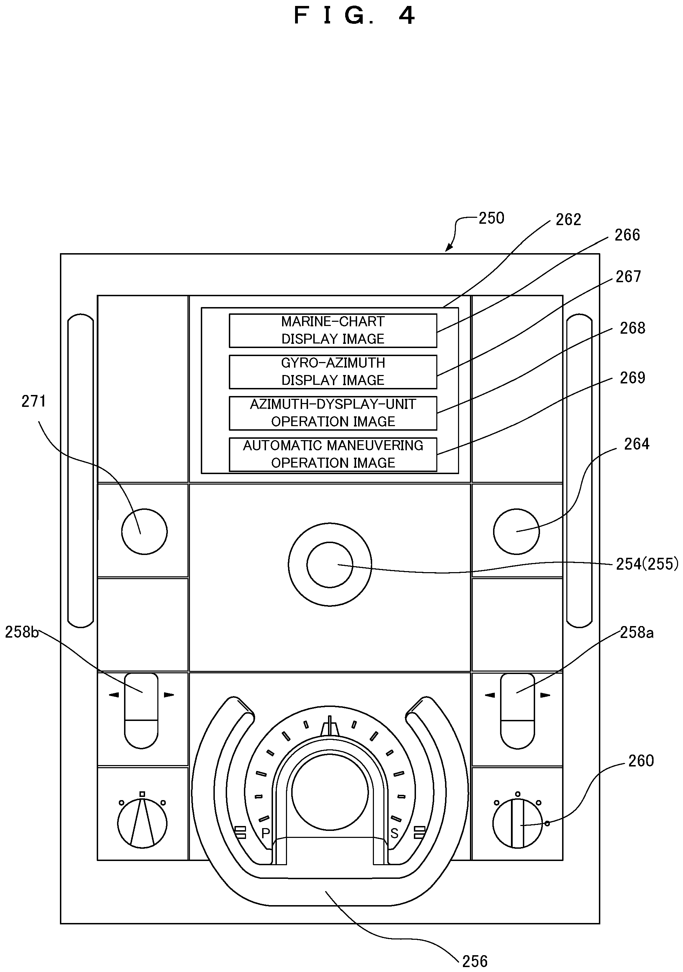

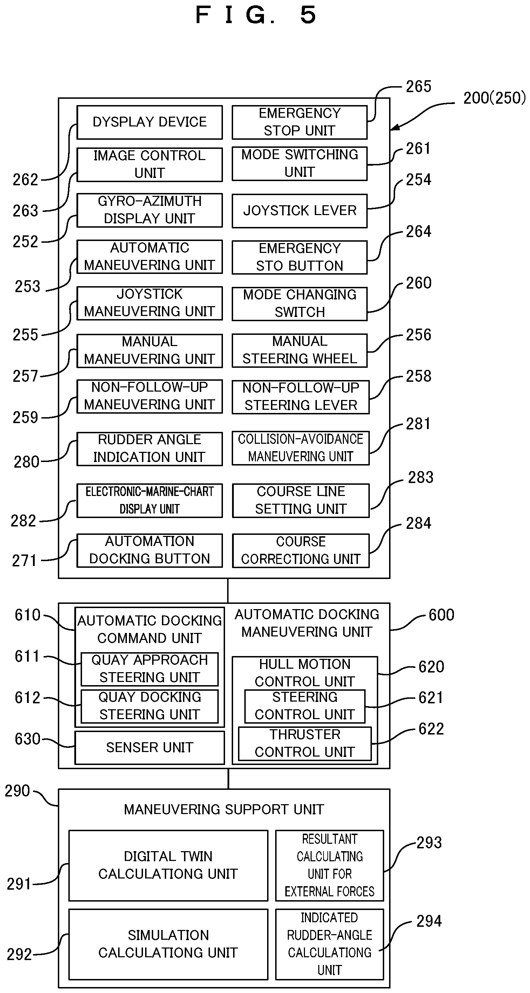

As illustrated in FIGS. 1 to 5, a uniaxial twin-rudder ship having an automatic docking function according to the present embodiment includes a propulsion system 100, a maneuvering system 200 for controlling the propulsion system 100, and an observation system 300 for observing a hull motion state of a ship.

In the propulsion system 100, a propulsion propeller 101 of a single-engine, single-shaft type is disposed at the stern of a hull 110 and two high-lift rudders 102 and 103 are disposed behind the propulsion propeller 101.

The high-lift rudders 102 and 103 can turn outboard (to the outside) by 105° and turn inboard (to the inside) by 35°. While the propulsion propeller 101 of a single-engine, single-shaft type rotates forward, the pair of independent high-lift rudders 102 and 103 are independently operated at various angles. A propeller slipstream is distributed in a desired target direction by changing combinations of the rudder angles of the high-lift rudders 102 and 103 on both sides.

Therefore, by flexibly changing propulsion in each direction, propulsion around the stern is controlled 360° in all directions by controlling the propeller slipstream, allowing the ship to move ahead and astern, stop, turn forward, or turn astern, thereby freely controlling a movement of the ship.

The propulsion system 100 further includes rotary-vane steering engines 104 and 105 for driving the high-lift rudders 102 and 103, rudder controllers (servo amplifiers) 106 and 107 for controlling the rotary-vane steering engines 104 and 105, a bow thruster 108 disposed at the bow of a hull 110, and a thruster controller 109 for controlling the bow thruster 108.

Moreover, pump units 151 and 152, rudder angle transmitters 153 and 154, and feedback units 155 and 156 are connected to the rotary-vane steering engines 104 and 105. The feedback units 155 and 156 are connected to the rudder controllers 106 and 107.

The observation system 300 includes a ship speed measuring device 312 for measuring a speed of a ship 501 in the fore-and-aft direction and a speed of the ship 501 in the hull lateral direction, a position measuring device 313 for measuring a position of the ship 501 using a GPS or the like, a direction finding device 314 for measuring the heading of the ship 501, and a quay separation distance measuring device 315 for measuring a bow distance between the bow of the ship 501 and a target quay 700 and a stern distance between the stern of the ship 501 and the target quay 700.

A maneuvering system 200 is stored in a maneuvering stand 250. A gyrocompass 251, a ship radar 310, the ship speed measuring device 312, the position measuring device 313, the direction finding device 314, and the quay separation distance measuring device 315 are connected to the maneuvering stand 250.

When a collision with another ship is predicted, the ship radar 310 transmits a collision alarm signal from an alarm signal output unit 311 to the maneuvering system 200 of the maneuvering stand 250.

The maneuvering system 200 includes, in a stand cabinet, a combination of the following units: a gyro-azimuth display unit 252 that displays the gyro azimuth of the gyrocompass 251, an automatic maneuvering unit 253 for maneuvering in an operation mode using an autopilot with a GPS compass, a joystick maneuvering unit 255 for maneuvering in an operation mode using a joystick lever 254, a manual maneuvering unit 257 for maneuvering in an operation mode using a manual steering wheel 256, a non-follow-up maneuvering unit 259 for maneuvering in an operation mode using non-follow-up steering levers 258a and 258b, and a mode switching unit 261 that switches the maneuvering units by means of a mode changing switch 260.

The maneuvering system 200 further includes a display device 262 including a touch panel on the screen, an image control unit 263 that controls an image displayed on the display device 262, an emergency stop unit 265 that stops the ship in an operation mode for urgently stopping the ship prior to all the operation modes by operating an emergency stop button 264, a rudder angle indication unit 280 that provides an indicated rudder angle to the rotary-vane steering engines 104 and 105 through the rudder controllers 106 and 107, a collision-avoidance maneuvering unit 281 for maneuvering in an operation mode of collision-avoidance maneuvering by the ship when sighting another ship to the starboard if two ships crossing the course are likely to collide with each other during navigation in a congested sea area, an electronic-marine-chart display unit 282 that displays an electronic marine chart for sailing on the display device 262, a course line setting unit 283 that sets the planned course line of the ship on the electronic marine chart for sailing, and a course correcting unit 284 that corrects a deviation of the ship from the course line.

The maneuvering system 200 further includes a maneuvering support unit 290 that calculates a proper steering angle necessary for navigation on a planned course line and outputs the calculated proper steering angle as an indicated rudder angle to the rudder angle indication unit 280, and an automatic docking maneuvering unit 600 that automatically performs landing maneuvering by operating an automatic docking button 271.

The image control unit 263 selectively or simultaneously displays a marine-chart display image 266 of an electronic marine chart for sailing, a gyro-azimuth display image 267 indicating a gyro azimuth, an azimuth-display-unit operation image 268 for a touching operation of the gyro-azimuth display unit 252 on a monitor screen, and an automatic maneuvering operation image 269 for a touching operation of the automatic maneuvering unit 253 on the monitor screen.

The joystick maneuvering unit 255 is configured so as to operate the joystick lever 254 in either of X and Y directions. The command motion direction of the hull is controlled by the inclination direction of the joystick lever 254, and a fore-and-aft direction command speed and a hull-lateral-direction command speed are controlled by the angle of inclination in the inclination direction.

The joystick maneuvering unit 255 controls the rudder angles of the high-lift rudders 102 and 103 on both sides to rudder angles set according to the inclination direction of the joystick lever 254 and combines the rudder angles of the high-lift rudders 102 and 103 on both sides, so that the propulsion of a propeller slipstream is turned to a target direction and the rudder angles of the high-lift rudders 102 and 103 on both sides are controlled up to 105° on the outside and up to 35° on the inside by both of the rotary-vane steering engines 104 and 105.

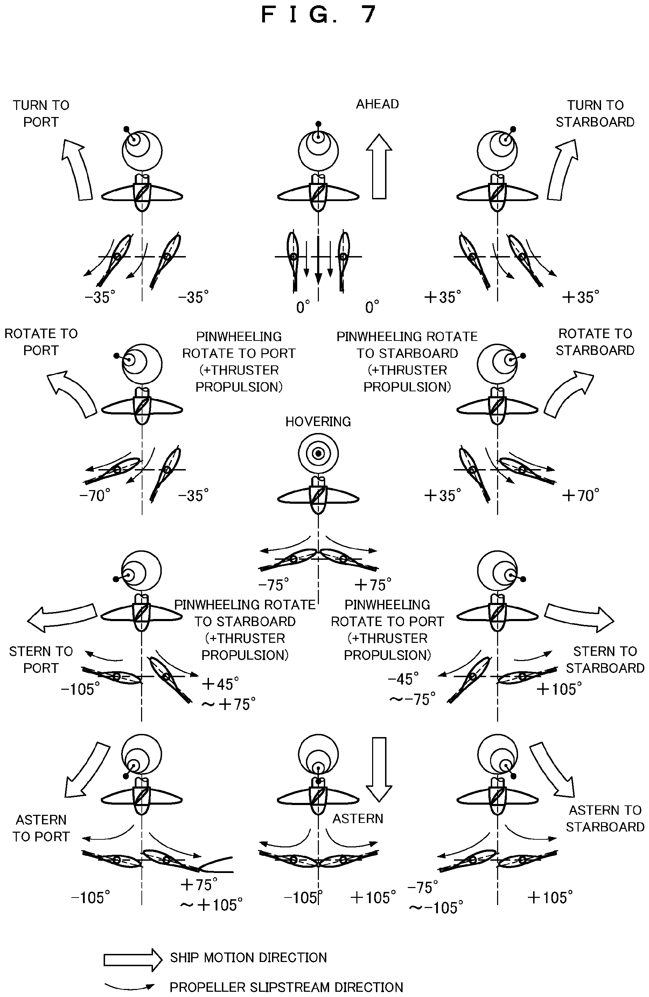

Referring to FIG. 7, combinations of basic rudder angles of the high-lift rudders 102 and 103, the states of the joystick lever 254, the designations of the combinations and the states, and the directions of propeller slipstream lines and motions will be described below.

In FIG. 7, the rudders are illustrated in a horizontal cross section and the rudder angles of the rudders are indicated beside or below the rudders. The rudder angles of sterns to the right are indicated as positive (+) angles and the rudder angles to the left are indicated as negative (-) angles. The designations of the combinations of the rudder angles are indicated. The propeller slipstreams are indicated by thin arrow lines and the propulsive directions of the ship moved by the slipstreams are indicated by thick and blank arrow lines.

Specifically, "turn to port" indicates the port rudder at -35° and the starboard rudder at -35°, "rotate to port" indicates the port rudder at -70° and the starboard rudder at -35°, "stern to port" indicates the port rudder at -105° and the starboard rudder at +45° to +75°, "astern to port" indicates the port rudder at -105° and the starboard rudder at +75° to +105°, "ahead" indicates the port rudder at 0° and the starboard rudder at 0°, "hovering" indicates the port rudder at -75° and the starboard rudder at +75°, "astern" indicates the port rudder at -105° and the starboard rudder at +105°, "turn to starboard" indicates the port rudder at +35° and the starboard rudder at +35°, "rotate to starboard" indicates the port rudder at +35° and the starboard rudder at +70°, "stern to starboard" indicates the port rudder at -45° to -75° and the starboard rudder at +105°, and "astern to starboard" indicates the port rudder at -75° to -105° and the starboard rudder at +105°.

Moreover, when a port rotational speed is increased by applying the thruster propulsion of the bow thruster 108 to starboard during "rotate to port", "pinwheeling rotate to port" can be made. When a starboard rotational speed is increased by applying the thruster propulsion of the bow thruster 108 to port during "rotate to starboard", "pinwheeling rotate to starboard" can be made.

Likewise, when a starboard rotational speed is increased by applying the thruster propulsion of the bow thruster 108 to port during "stern to port", "pinwheeling rotate to starboard" is made. When a port rotational speed is increased by applying the thruster propulsion of the bow thruster 108 to starboard during "stern to starboard", "pinwheeling rotate to port" is made.

Moreover, the rotational center can be moved by increasing or reducing the thruster propulsion of the bow thruster 108.

The uniaxial twin-rudder ship including the two high-lift rudders 102 and 103 and the bow thruster 108 can freely change and output the direction and magnitude of propulsion in all the directions of the ship by changing the combined rudder angles of the high-lift rudders 102 and 103, and obtain a pinwheeling swing by combining the thruster propulsions of the bow thruster 108.

The automatic maneuvering unit 253 guides and controls the ship to a predetermined course based on a GPS compass, current position information on the ship based on an electronic marine chart system, guidance route information, and stopped-ship retaining position information.

When the emergency stop button 264 is pressed in emergency, the emergency stop unit 265 cancels the rudder angles of current maneuvering in any maneuvering state indicated by the joystick lever 254 or in maneuvering in any other operation modes. The emergency stop unit 265 then turns the port rudder 103 to port (clockwise in top view) and the starboard rudder 102 to starboard (counterclockwise in top view) to hardover (full), so that the ship is stopped by an applied braking force.

The manual maneuvering unit 257 is provided for maneuvering the ship while controlling the rudder angles of the two high-lift rudders 102 and 103 by a rotating operation of the manual steering wheel 256.

The non-follow-up maneuvering unit 259 turns the ship to starboard or port according to a time for laterally operating the non-follow-up steering levers 258a and 258b.

The collision-avoidance maneuvering unit 281 performs collision-avoidance maneuvering by automatically controlling a propulsive direction or a ship speed according to a current situation based on position information on the ship 501 and one or more other ships 401 and 402, the position information being obtained from the gyrocompass 251 and the ship radar 310, azimuth information on the ship 501 and the other ships 401 and 402, distance information on the other ships 401 and 402, and relative speed information on the other ships 401 and 402.

The course correcting unit 284 determines a minimum separation distance from the ship to a course line as a displacement of the position of the ship from the course line in a state in which the reproduced heading of the ship is parallel to a course line on an electronic marine chart for sailing by a digital twin calculating unit 291. When the minimum separation distance exceeds a set acceptable range, a course correction rudder angle set to direct the heading to a course crossing the course line is output to the rudder angle indication unit 280.

The maneuvering support unit 290 includes the digital twin calculating unit 291, a simulation calculating unit 292, a resultant calculating unit 293 for external forces, and an indicated rudder-angle calculating unit 294.

The digital twin calculating unit 291 makes a real-time collection of a ship speed measured by the ship speed measuring device 312, a ship position measured by the position measuring device 313, and ship heading measured by the direction finding device 314 and reproduces a real hull motion of the ship obtained with a current steering angle on an electronic marine chart for sailing.

The simulation calculating unit 292 displays an assumed hull motion of the ship on an electronic marine chart for sailing, the assumed motion being determined with the current steering angle by calculation.

The resultant calculating unit 293 for external forces calculates the direction of application and magnitude of the resultant of external forces applied to the hull based on a ship speed difference, a ship position difference, and a heading difference in a real hull motion and an assumed hull motion.

The indicated rudder-angle calculating unit 294 calculates a corrected rudder angle against the resultant external force and calculates a proper steering angle by correcting a current steering angle by the corrected rudder angle.

The automatic docking maneuvering unit 600 includes an automatic docking command unit 610, a hull motion control unit 620, and a sensor unit 630. The sensor unit 630 inputs the outputs of the measuring devices of the observation system 300 to the hull motion control unit 620.

The automatic docking command unit 610 includes a quay approach steering unit 611 in charge of landing navigation to the target quay 700, and a quay docking steering unit 612 that causes the ship to approach the target quay 700 from a position near the target quay 700.

The quay approach steering unit 611 instructs the hull motion control unit 620 on a motion command direction of a hull motion that directs the ship 501 to a landing course reaching the target quay 700 selected and set on an electronic marine chart for sailing and a fore-and-aft direction command speed and a hull-lateral-direction command speed that are necessary for the hull motion.

The quay docking steering unit 612 instructs the hull motion control unit 620 on steering in which the fore-and-aft direction of the ship 501 is located in parallel with the target quay 700 at a position near the target quay 700 and the ship 501 is caused to approach and dock in the target quay 700 while keeping the parallel state.

The hull motion control unit 620 includes a steering control unit 621 that controls the rotary-vane steering engines 104 and 105 and controls the direction of a hull motion with a combination of the rudder angles of the two high-lift rudders 102 and 103, and a thruster control unit 622 that controls a bow direction by adjusting the thruster propulsion of the bow thruster 108 by means of the thruster controller 109.

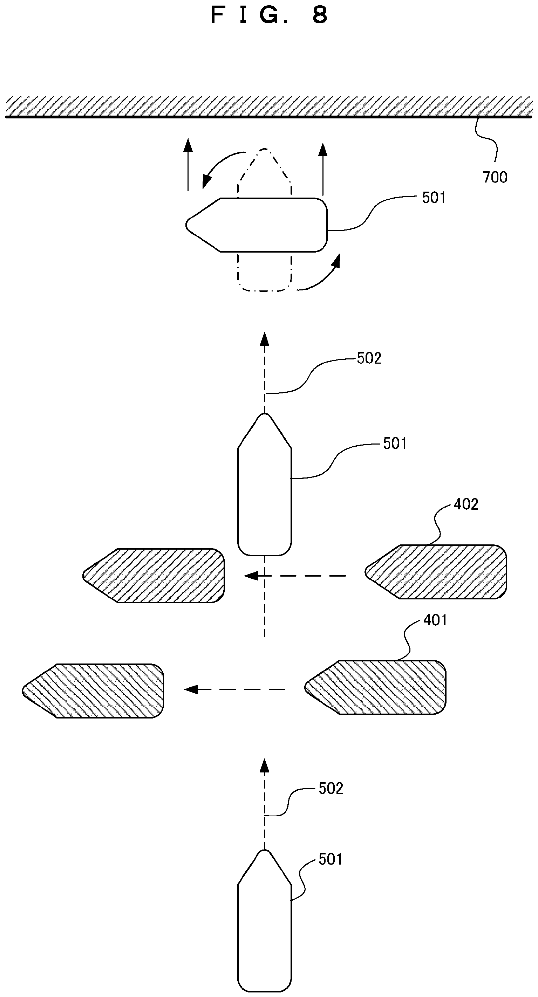

As illustrated in FIG. 8, the hull motion control unit 620 obtains the motion command direction, the fore-and-aft direction command speed, and the hull-lateral-direction command speed by means of the steering control unit 621 and the thruster control unit 622 under the instructions of the quay proximity steering unit 611, and allows navigation to a position at a set distance from the target quay 700.

Furthermore, under the instructions of the quay docking steering unit 612, steering for a pinwheeling swing is performed by the steering control unit 621 and the thruster control unit 622 such that a bow distance and a stern distance that are measured by the quay separation distance measuring device 315 are made equal to each other and the fore-and-aft direction of the ship is parallel to the target quay 700, and then steering for a lateral movement is performed to cause the ship 501 to laterally approach and dock in the target quay 700 while keeping the parallel state.

The operations of the configuration described above will be described below.

### 1. Operation mode by joystick

The mode changing switch 260 is operated to select an operation mode by the joystick. The joystick maneuvering unit 255 issues the commands of the command motion direction of the hull, fore-and-aft direction command propulsion, and the lateral command propulsion of the hull by using the joystick lever 254.

In the maneuvering, the propulsion propeller 101 is rotated forward and the high-lift rudders 102 and 103 are independently operated at various angles so as to control a propeller slipstream, thereby controlling propulsion around the stern 360° in all directions. Under this control, the ship can be maneuvered forward and backward, stopped, turned forward, and turned backward, thereby improving maneuverability.

In other words, by changing the combinations of the rudder angles of the rudders on both sides, a propeller slipstream can be turned in a desired target direction so as to change propulsion to the direction. The combinations of rudder angles in the present embodiment are merely exemplary and can be optionally changed to obtain a target propulsion direction and propulsion.

As described above, the reversal of the propulsion of the thruster (reversal of a propeller) is not necessary in maneuvering, and any kind of maneuvering control can be performed while a main engine rotates forward all the time. Without increasing or reducing the revolutions of the main engine, the rudder angles of both rudders are adjusted so as to minutely control the speed of the ship in a continuous manner from a maximum ahead speed to a maximum astern speed according to the number of revolutions of the propeller at that time.

### 2. Operation mode by emergency stop unit

An action to press the emergency stop button 264 starts the emergency stop unit 265, thereby urgently stopping the ship prior to all the operation modes. Specifically, regardless of the steering mode of the joystick lever 254 or other operation modes, the emergency stop unit 265 switches the mode to a crush astern mode ("ASTERN" in which the port rudder to 105° aport and the starboard rudder to 105° a starboard) to allow both rudders to generate quite a large braking force and astern power. Thus, the hull can be stopped in a much shorter time and shorter distance than in maneuvering with a reversed propeller.

Also in the crush astern mode, it is not necessary to stop the main engine and restart reversing. Thus, the ship is not brought into a so-called uncontrolled state, enabling quick response to situations in navigation.

If the ship is turned by the characteristics of the ship or disturbance during maneuvering by the emergency stop unit 265 or if the direction of a thrust force, e.g., heading is to be changed as required, an operation of the joystick lever 254 enables collision avoidance while freely maneuvering the ship with the joystick lever 254 as in an ordinary joystick operation.

### 3. Autopilot operation mode

In normal navigation maneuvering, the mode changing switch 260 is operated to select an autopilot operation mode.

The automatic maneuvering operation image 269 is displayed on the monitor screen of the display device 262, the position of the ship, a target azimuth, a destination position, or a fore-and-aft line azimuth is input to the automatic maneuvering unit 253 by a touching operation on the monitor screen, and the ship is maneuvered according to a set course by automatic guidance.

Furthermore, an electronic marine chart for sailing is displayed as the marine-chart display image 266 on the monitor screen of the display device 262 by the electronic-marine-chart display unit 282, and the planned course line of the ship is set on the electronic marine chart for sailing by the course line setting unit 283.

The automatic maneuvering unit 253 properly controls rudder angles based on current position information on the ship, guidance route information, and stopped-ship retaining position information. The autopilot retains a course indicated by the gyrocompass, as a target azimuth or a fore-and-aft line azimuth that is set in the automatic maneuvering operation image 269.

However, the position of the ship is not retained on a course line, so that the position of the ship may be deviated from the course line by a wind pressure or a tidal current or the like while the heading is kept in parallel with the course line on an electronic marine chart for sailing.

The course correcting unit 284 determines a minimum distance from the ship to a course line as a displacement of the ship from the course line in a state in which the heading of the ship reproduced on an electronic marine chart for sailing by the digital twin calculating unit is set in parallel with the course line by maneuvering with the autopilot on the electronic marine chart for sailing.

When the minimum distance exceeds a set acceptable range, maneuvering with the autopilot is temporarily stopped and a course correction rudder angle set to direct the heading to a course crossing the course line is output to the rudder angle indication unit 280.

The rudder angle indication unit 280 provides the course correction rudder angle to the rotary-vane steering engines 104 and 105 through the rudder controllers 106 and 107, and the course correcting unit 284 returns to maneuvering with the autopilot when the ship position reaches the course line.

The maneuvering support unit 290 makes, by means of the digital twin calculating unit 291, a real-time collection of a ship speed measured by the ship speed measuring device 312, a ship position measured by the position measuring device 313, and ship heading measured by the direction finding device 314 and reproduces a real hull motion of the ship obtained with a current steering angle on an electronic marine chart for sailing on the monitor screen of the display device 262.

The real hull motion of the ship is determined by a driving force currently applied to the hull by a steering angle and various external forces applied to the hull by a water resistance, wind power, and tidal power or the like, the real hull motion being reproduced by the digital twin calculating unit 291 on the electronic marine chart for sailing.

Although external forces applied to the hull cannot be separately measured, the real hull motion of the ship reproduced on the electronic marine chart for sailing is represented as a result of the effects of all the external forces applied to the hull.

The simulation calculating unit 292 displays an assumed hull motion of the ship on an electronic marine chart for sailing, the assumed motion being determined with the current steering angle by calculation.

For the assumed hull motion of the ship, which is displayed on the electronic marine chart for sailing by the simulation calculating unit 292, a driving force applied to the hull with a current steering angle is calculated, that is, a force generated by a combination of the propulsion of the propulsion propeller 101 and the rudder angles of the high-lift rudders 102 and 103 is calculated. The driving force is calculated as a force applied to the hull. The calculation by the simulation calculating unit 292 is performed without consideration of any one of the external forces. Although measurable external forces can be imported into a calculation by the simulation calculating unit 292, importing individual external forces into a calculation by the simulation calculating unit 292 results in a complicated operation, and some of the external forces are not measurable. Thus, all the external forces cannot be imported into a calculation by the simulation calculating unit 292.

Hence, comparing a real hull motion reproduced on an electronic marine chart for sailing by the digital twin calculating unit 291 based on a real-time collection of a ship speed, a ship position, and ship heading with an assumed hull motion displayed on the electronic marine chart for sailing by the simulation calculating unit 292 means a comparison between a real hull motion as an actual result of the application of a controllable driving force and an uncontrollable external force and an assumed hull motion as a result of a calculation on the assumption that only a controllable driving force is applied.

Thus, without determining individual external forces such as wind, waves, and tidal currents that are applied to the hull by calculation, the direction of application and magnitude of the resultant of all external forces applied to the hull can be obtained by a motion difference between a real hull motion and an assumed hull motion.

Furthermore, the resultant calculating unit 293 for external forces calculates the direction of application and magnitude of the resultant of external forces applied to the hull based on a ship speed difference, a ship position difference, and a heading difference in a real hull motion and an assumed hull motion. Based on the direction of application and magnitude of the resultant of external forces, the indicated rudder-angle calculating unit 294 calculates a corrected rudder angle against the resultant external force and corrects a current steering angle by the corrected rudder angle, thereby calculating a proper steering angle, that is, a steering angle necessary for navigation of a planned course line set on the electronic marine chart for sailing. The maneuvering support unit 290 outputs the calculated proper steering angle as an indicated rudder angle to the rudder angle indication unit 280.

The automatic maneuvering unit 253 provides, in stop maneuvering on an object on a course line, rudder angles to both of the high-lift rudders 102 and 103 to set the propulsion of a propeller slipstream as astern power with the propulsion propeller 101 rotating forward all the time, decelerates the ship 501 by the astern power against an inertial force applied in the forward direction of the ship 501, and controls the rudder angles provided at both of the high-lift rudders 102 and 103 within a range from a rudder angle for applying a maximum propeller slipstream as the astern power to a rudder angle for eliminating the ahead power of the propeller slipstream.

Also in the stop maneuvering, in consideration of the effects of external forces, the indicated rudder-angle calculating unit 294 calculates proper steering angles of both of the high-lift rudders 102 and 103 in order to decelerate the ship to a proper ship speed for stopping the ship within a distance from the ship 501 to an object, the proper steering angles being calculated based on a resultant external force calculated by the resultant calculating unit 293 for external forces.

### 4. Manual operation mode

The mode changing switch 260 is operated to select an operation mode by the manual steering wheel 256. In this operation mode, a rotating operation of the manual steering wheel 256 instructs the manual maneuvering unit 257 about the rudder angles of the two high-lift rudders 102 and 103, and the rudder angles of the two high-lift rudders 102 and 103 are controlled to maneuver the ship.

### 5. Non-follow-up operation mode

The mode changing switch 260 is operated to select an operation mode by the non-follow-up steering levers 258a and 258b. In this operation mode, the non-follow-up maneuvering unit 259 turns the rotary-vane steering engines 104 and 105, which correspond to the respective non-follow-up steering levers 258a and 258b, to starboard or port according to a time during which the non-follow-up steering levers 258a and 258b are operated to starboard or port.

### 6. Collision-avoidance operation mode

In navigation in congested waters, the mode changing switch 260 is operated to select an operation mode by the collision-avoidance maneuvering unit 281.

In the collision-avoidance maneuvering mode for navigation in congested waters, the collision-avoidance maneuvering unit 281 performs collision-avoidance maneuvering in response to a collision alarm signal transmitted from the ship radar 310 when the other ships 401 and 402 crossing a course line 502 of the ship 501 are likely to collide with the ship 501.

In a collision-avoidance maneuvering mode for navigation in a congested water, as illustrated in FIG. 8, the collision-avoidance maneuvering unit 281 avoids collision with the other ships 401 and 402 in response to a collision alarm signal transmitted from the ship radar 310 when the other ships 401 and 402 crossing the course line 502 of the ship 501 are likely to collide with the ship 501 on an electronic marine chart for sailing, the ship 501 being decelerated by astern power against an inertial force applied in the forward direction of the ship 501, the ship 501 being continuously navigated on the current course line 502 while viewing the other ships 401 and 402 on the starboard side with the propulsion propeller 101 always rotated forward, the astern power being generated as the propulsion of a propeller slipstream with rudder angles formed at the high-lift rudders 102 and 103.

Rudder angles formed by the collision-avoidance maneuvering unit 281 at both of the high-lift rudders 102 and 103 range from a rudder angle for applying a maximum propeller slipstream as astern power to a rudder angle for eliminating the ahead power of a propeller slipstream. Furthermore, the astern power that increases or decreases with a rudder angle is controlled according to distances from the other ships 401 and 402 while the propulsion propeller 101 keeps a constant forward rotation, and the ship 501 is decelerated to obtain a time required for the other ships 401 and 402 crossing the course line 502 of the ship 501.

Also in the collision-avoidance maneuvering, in consideration of the effects of external forces, proper steering angles of both of the high-lift rudders 102 and 103 are calculated for deceleration to a proper ship speed for avoiding the other ships 401 and 402 within distances from the ship 501 to the other ships 401 and 402, the proper steering angles being calculated by the indicated rudder-angle calculating unit 294 based on a resultant external force calculated by the resultant calculating unit 293 for external forces.

Subsequently, the other ships 401 and 402 cross the course line 502 of the ship 501, and then the rudder angles of both of the high-lift rudders 102 and 103 are controlled to perform maneuvering for continuously navigating the ship 501 on the course line 502 by using the propulsion of a propeller slipstream as ahead power.

### 7. Automatic docking operation mode

In the case of maneuvering for automatic docking in the target quay 700, the automatic docking button 271 is operated to start the automatic docking maneuvering unit 600.

The automatic docking maneuvering unit 600 causes the sensor unit 630 to input the outputs of the measuring devices of the observation system 300 to the hull motion control unit 620.

The quay approach steering unit 611 of the automatic docking command unit 610 instructs the hull motion control unit 620 on a motion command direction of a hull motion that directs the ship 501 to a landing course reaching the target quay 700 selected and set on an electronic marine chart for sailing and a fore-and-aft direction command speed and a hull-lateral-direction command speed that are necessary for the hull motion.

Under the instructions of the quay approach steering unit 611, the hull motion control unit 620 obtains the motion command direction, the fore-and-aft direction command speed, and the hull-lateral-direction command speed by means of the steering control unit 621 and the thruster control unit 622 and allows navigation to a position at a set distance from the target quay 700 while receiving a speed of the ship 501 in the fore-and-aft direction and a speed of the ship 501 in the hull lateral direction, a position of the ship 501, the heading of the ship 501, and a bow distance between the bow of the ship 501 and the target quay 700, and a stern distance between the stern of the ship 501 and the target quay 700 from the sensor unit 630.

The quay docking steering unit 612 instructs the hull motion control unit 620 on steering in which the fore-and-aft direction of the ship 501 is located in parallel with the target quay 700 at a position near the target quay 700 and the ship 501 is caused to approach and dock in the target quay 700 while keeping the parallel state.

Under the instructions of the quay docking steering unit 612, the hull motion control unit 620 receives a speed of the ship 501 in the fore-and-aft direction and a speed of the ship 501 in the hull lateral direction, a position of the ship 501, the heading of the ship 501, and a bow distance between the bow of the ship 501 and the target quay 700, and a stern distance between the stern of the ship 501 and the target quay 700 from the sensor unit 630; meanwhile, steering for a pinwheeling swing is performed by the steering control unit 621 and the thruster control unit 622 such that a bow distance and a stern distance that are measured by the quay separation distance measuring device 315 are made equal to each other and the fore-and-aft direction of the ship is parallel to the target quay 700, and then steering for a lateral movement is performed to cause the ship 501 to laterally approach and dock in the target quay 700 while keeping the parallel state.

The steering is performed as follows: For example, a lateral movement is made to port by applying the thruster propulsion of the bow thruster 108 to starboard during "backing to port", and a lateral movement is made to starboard by applying the thruster propulsion of the bow thruster 108 to port during "backing to starboard".

Thus, under the instructions of the quay approach steering unit 612, navigation to a position close to the target quay is allowed in landing navigation with the fore-and-aft direction directed to the target quay, approach can be made to the target quay 700 along a short course line in a small water in a short time, thereby relaxing the states of external forces that affect the hull, the external forces including tidal power of an offshore current or an onshore current upon landing, a tide, and wind power.

Moreover, a steering angle can be corrected upon landing in consideration of external forces such as wind, waves, and a tidal current that are applied to the hull, achieving landing maneuvering with high accuracy.

In other words, the maneuvering support unit 290 described above functions naturally to compare a real hull motion of the ship 501 reproduced on an electronic marine chart for sailing by the digital twin calculating unit 291, and an assumed hull motion of the ship 501 displayed on the electronic marine chart for sailing by the simulation calculating unit 292, so that the direction of application and magnitude of the resultant of all external forces applied to the hull can be recognized without determining individual external forces such as wind, waves, and tidal currents that are applied to the hull. Hence, a proper steering angle necessary for landing navigation can be calculated by correcting a current steering angle by the corrected rudder angle against the resultant external force.

The motion characteristics of the ship vary according to the state of a load (the weight and the stacking position of the load). Even if steering is performed at the same ship speed and the same rudder angle, hull motions based on the steering vary according to the state of a load. Specifically, even if a change of heading is set to have an optimum steering amount in a certain loading state, a change of the loading state varies the motion characteristics of the ship according to the state of a load on a moment-to-moment basis even with the same steering amount, so that the steering amount has an overshoot or undershoot.

Therefore, real hull motion characteristics based on steering and assumed motion characteristics are always measured to save data, and in order to correct a difference in the subsequent steering, optimum steering is performed by adding or reducing a steering amount such that assumed hull motion characteristics and real hull motion characteristics agree with each other.

This eliminates excessive steering during normal navigation while promoting safety, thereby improving the capability of propulsion.

Also in the landing navigation, the same maneuvering as collision-avoidance maneuvering is also naturally possible.

## Claims

1. A uniaxial twin-rudder ship having an automatic docking function, the ship including a propulsion system, a maneuvering system that controls the propulsion system, and an observation system that observes a hull motion state of the ship, wherein
the propulsion system includes a propulsion propeller disposed at a stern of the ship, a pair of right and left high-lift rudders disposed behind the propulsion propeller, a pair of steering engines that drive the respective high-lift rudders, a bow thruster, and a thruster controller that controls the bow thruster,
the observation system includes a ship speed measuring device that measures a speed of the ship in a fore-and-aft direction and a speed of the ship in a hull lateral direction, a position measuring device that measures a position of the ship, a direction finding device that measures a heading of the ship, and a quay separation distance measuring device that measures a bow distance between a bow of the ship and a target quay and a stern distance between the stern of the ship and the target quay,
the maneuvering system includes: an automatic docking maneuvering unit including an automatic docking command unit, a hull motion control unit, and a sensor unit, and a maneuvering support unit,
the sensor unit inputs outputs of measuring devices of the observation system to the hull motion control unit and the maneuvering support unit,
the automatic docking command unit includes: a quay approach steering unit in charge of landing navigation to the target quay, and a quay docking steering unit that causes the ship to approach the target quay from a position near the target quay,
the quay proximity steering unit instructs the hull motion control unit on a motion command direction of a hull motion that directs the ship to a landing course reaching the target quay selected and set on an electronic marine chart for sailing and a fore-and-aft direction command speed and a hull-lateral-direction command speed that are necessary for the hull motion,
the quay docking steering unit instructs the hull motion control unit on steering in which a fore-and-aft direction of the ship is located in parallel with the target quay at a position near the target quay and the ship is caused to approach and dock in the target quay while keeping the parallel state,
the hull motion control unit includes a steering control unit that controls the steering engines and controls a direction of a hull motion with a combination of rudder angles of the two high-lift rudders, and a thruster control unit that controls a bow direction by adjusting thruster propulsion of the bow thruster by means of the thruster controller,
under instructions of the quay proximity steering unit, a motion command direction, a fore-and-aft direction command speed, and a hull-lateral-direction command speed are obtained by the steering control unit and the thruster control unit and navigation is allowed to a position at a set distance from the target quay,
under the instructions of the quay docking steering unit, steering for a pinwheeling swing is performed by the steering control unit and the thruster control unit such that a bow distance between the bow and the quay and a stern distance between the stern and the quay that are measured by the quay separation distance measuring device are made equal to each other and the fore-and-aft direction of the ship is parallel to the target quay, and then steering for a lateral movement is performed to cause the ship to laterally approach and dock in the target quay while keeping the parallel state,
the maneuvering support unit includes a digital twin calculating unit, a simulation calculating unit, a resultant calculating unit for external forces, and an indicated rudder-angle calculating unit,
the digital twin calculating unit makes a real-time collection of a ship speed measured by the ship speed measuring device, a ship position measured by the position measuring device, ship heading measured by the direction finding device, and a bow distance and a stern distance that are measured by the quay separation distance measuring device and reproduces a real hull motion of the ship obtained with a current steering angle and a current thruster propulsion on an electronic marine chart for sailing,
the simulation calculating unit displays an assumed hull motion of the ship determined by calculation on the electronic marine chart for sailing on the assumption that a force applied to a hull is a driving force of a hull motion with the current steering angle and the current thruster propulsion,
the resultant calculating unit for external forces calculates a direction of application and magnitude of a resultant of external forces applied to the hull based on a ship speed difference, a ship position difference, and a heading difference in the real hull motion and the assumed hull motion, and
the indicated rudder-angle calculating unit calculates a corrected rudder angle and a corrected thruster propulsion against a resultant external force, calculates a proper steering angle, which is necessary for landing navigation against an external force, by correcting a current steering angle by the corrected rudder angle, calculates a proper thruster propulsion, which is necessary for landing navigation against an external force, by correcting a current thruster propulsion by the corrected thruster propulsion, and provides the calculated proper steering angle as an indicated rudder angle to the hull motion control unit and the proper thruster propulsion as an indicated output to the hull motion control unit.
